# EUROPEAN PATENT APPLICATION

(11) **EP 3 351 315 A1**
(43) Date of publication of application: **25.07.2018**
(21) Application number: 15904190.4
(22) Date of filing: 19.10.2015
(51) Int. Cl.: B21D 35/00, B21D 22/20, B21D 26/021, C21D 1/22

(54) **PRODUCT MOLDING METHOD AND APPARATUS AND PRODUCT**

(30) Priority: 15.09.2015 KR 20150130159
(71) Applicant: Posco, Pohang-si, Gyeongsangbuk-do 37859 (KR)
(72) Inventor: HAN, Sang-Bin, Gwangyang-si Jeollanam-do 57807 (KR); LEE, Tae-Oh, Gwangyang-si Jeollanam-do 57807 (KR); SHIN, Jeom-Soo, Gwangyang-si Jeollanam-do 57807 (KR); KIM, Yong-Joo, Gwangyang-si Jeollanam-do 57807 (KR)
(74) Representative: Potter Clarkson LLP
(86) International application number: PCT/KR2015/011031
(87) International publication number: WO 2017/047860

(57) **Abstract**

The present invention relates to product molding method and apparatus and a product. A product molding apparatus comprises: a lower mold which has one or more molding grooves formed thereon and on which a material is mounted; an upper mold which is disposed above the lower mold and is for applying pressure to the material; and a punch part which is provided on the upper mold, is inserted into the molding grooves on the lower mold such that the material is molded, and discharges a filling material that has been pressed. The present invention enables quick and easy molding of a product by means of both hot press forming and hydroforming, thereby reducing manufacturing procedures and time and thus saving cost.

## Description

### [Technical Field]

The present disclosure relates to a method of molding a product, a device, and a product, using hot press forming and hydroforming.

### [Background Art]

Hot press forming may be used in a case in which automotive parts are manufactured using a plate.

Such hot press forming is a method in which a material is heated to a predetermined temperature, rapidly transferred to be mounted on a mold in a press, and molded to become a product, and the material is simultaneously cooled to a relatively low temperature in the mold, thereby realizing a product having rigidity.

For example, a process of manufacturing an impact absorbing member of an automobile using a method described above will be briefly described. A plate material may be heated to a predetermined temperature in a heating furnace and transferred to be mounted on a lower mold in a press by a transfer device, and an upper mold of a press may be lowered to be closed. Thus, a preliminary molding may be molded to have a form processed in a lower mold and an upper mold and may, simultaneously, be cooled to have rigidity.

In order to apply a preliminary molding manufactured using a method described above to an actual vehicle, a plurality of stiffeners absorbing impacts should be bonded to a portion to which impacts are applied, using a method such as welding. Subsequently, external plates may be fixed to a product to which a stiffener is bonded, to allow impacts or external force to be withstood.

However, since, in a process described above, a plurality of stiffeners should be bonded to a preliminary molding using a method, such as welding, a significant amount of manufacturing time may be required. Thus, there may be a problem in which manufacturing costs are increased.

In addition, when impacts are applied to a product applied to an actual vehicle, stiffeners should perform a function of absorbing impacts to secure safety. However, since stiffeners have a flat structure, there is also a problem in which stiffeners may not absorb impacts or external force.

### [Disclosure]

### [Technical Problem]

An aspect of the present disclosure may provide a method of molding a product, a device, and a product, using hot press forming and hydroforming, reducing the number of processes and time required to manufacture the product to reduce costs in such a manner that a product including a protruding portion for reinforcement, as well as a protrusion or a bead, provided in the protruding portion, can be molded easily and quickly.

### [Technical Solution]

According to an aspect of the present disclosure, a method of molding a product comprises a heating step of heating a material; a mounting step of mounting the material on a lower mold; a first molding step of primarily molding the material by lowering an upper mold to the lower mold; a second molding step of secondarily molding the material by applying fluid pressure from the upper mold or the lower mold in a state in which the upper mold has been lowered; and a cooling step of cooling the material.

According to an aspect of the present disclosure, a product molding device comprises a lower mold in which at least one molding recess is formed and on which a material is mounted; an upper mold disposed above the lower mold to pressurize the material; and a punch portion disposed in the upper mold and inserted into the at least one molding recess of the lower mold to mold the material and discharging a filler having been pressurized.

According to an aspect of the present disclosure, a product is manufactured using steel and comprises a structure having martensite in at least a portion of the product, wherein a three-dimensional second molding portion smaller than a first molding portion is formed in a three-dimensional first molding portion.

### [Advantageous Effects]

According to an aspect of the present disclosure, the number of processes and time required to manufacture a product may be reduced to cut costs in such a manner that the product may be molded more easily and quickly, using hot press forming and hydroforming together.

In addition, for example, when an impact absorbing member applied to an actual vehicle is manufactured, a protrusion, a bead, or the like, may be formed in a portion absorbing an impact, thereby implementing a structure for absorbing an impact or external force to improve safety.

### [Description of Drawings]

FIG. 1 is a schematic view of composition of a product molding device according to an exemplary embodiment in the present disclosure.
FIG. 2 is an enlarged view of a filler supply portion illustrated in FIG. 1.
FIG. 3 is a detailed enlarged view of a composition of a punch portion and a lower mold, illustrated in FIG. 1.
FIG. 4 is a view of an operational state of the punch portion.
FIG. 5 is a view of an operational state of the lower mold.
FIG. 6 is a block diagram of a method of molding a product according to an exemplary embodiment.
FIG. 7 is a view of an example of a product formed using a method of molding a product and a device.

### [Best Mode for Invention]

Hereinafter, exemplary embodiments of the present disclosure will be described in detail with reference to the accompanying drawings. The disclosure may, however, be exemplified in many different forms and should not be construed as being limited to the specific embodiments set forth herein, and those skilled in the art and understanding the present disclosure could easily accomplish retrogressive inventions or other embodiments included in the scope of the present disclosure by the addition, modification, and removal of components within the same scope, but those are to be construed as being included in the scope of the present disclosure. Like reference numerals will be used to designate like components having similar functions throughout the drawings within the scope of the present disclosure.

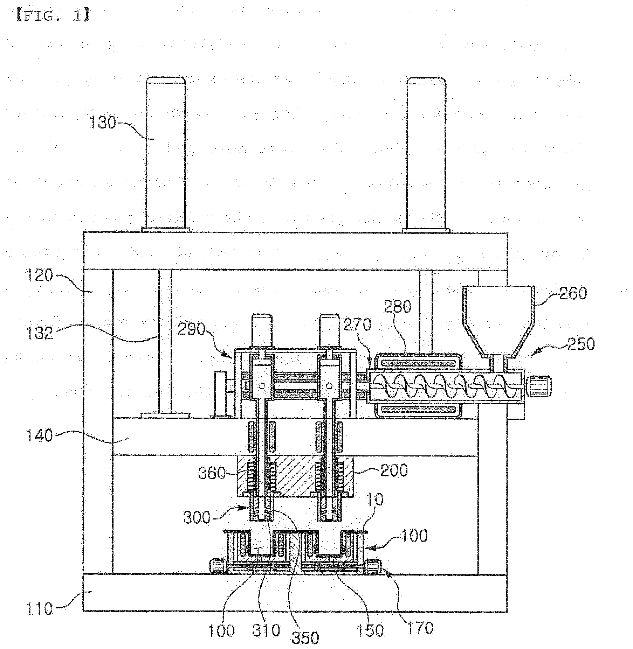

FIG. 1 is a schematic view of composition of a product molding device according to an exemplary embodiment in the present disclosure.

As illustrated therein, the product molding device according to an exemplary embodiment may include a lower mold 100 in which at least one molding recess 101 is formed and on which a material 10 is mounted; an upper mold 200 disposed above the lower mold 100 to pressurize a material; and a punch portion 300 disposed in the upper mold 200, inserted into at least one molding recess of the lower mold 100 to mold the material, and discharging a filler 20, having been pressurized.

The product molding device according to an exemplary embodiment may further include a lower base 110 positioning the lower mold 100, a frame 120 vertically disposed on each side of the lower base 110, an operation portion 130, such as a hydraulic cylinder, vertically disposed on the frame 120 and including an operating rod 132, and a moving plate 140 connected to the operating rod 132 and ascending and descending by the operating rod 132.

A lower mold 100 including at least one molding recess 101 formed therein may be disposed on the lower base 110. The upper mold 200 may be disposed below the moving plate 140 disposed in the operating rod 132 of the operation portion 130 to ascend and descend, thereby opening and closing a mold.

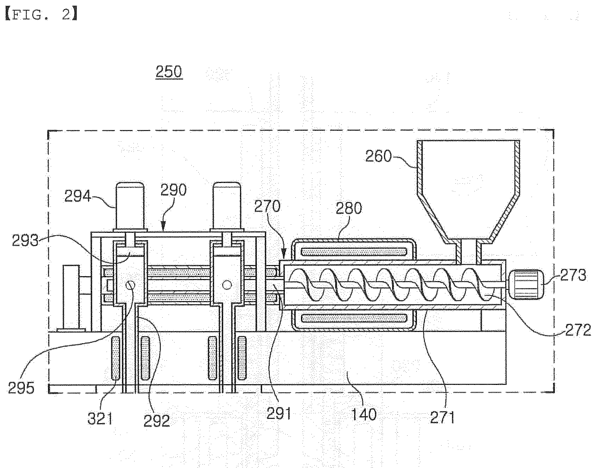

FIG. 2 is an enlarged view of a filler supply portion illustrated in FIG. 1.

As illustrated therein, the product molding device according to an exemplary embodiment may include a filler supply portion 250 supplying the filler 20 to a punch portion 300 and applying pressure thereto. The filler supply portion 250 may be disposed on the moving plate 140 without interference with respect to the operating rod 132 of the operation portion 130.

With reference to FIG. 2, the filler supply portion 250 may include a tank 260 supplying the filler 20, a transfer portion 270 connected below the tank 260 and disposed on the moving plate 140 to transfer the filler 20, a heating portion 280 disposed to surround at least a portion of the transfer portion 270, and a pressurizing portion 290 connected between a point downstream of the transfer portion 270 and the punch portion 300 and pressurizing the filler 20 to be transferred to the punch portion 300.

The tank 260 is provided as a hopper-shaped member disposed on an end of an upstream side of the transfer portion 270 and supplying the filler 20 including, for example, a liquid or a solid, in powdery or granular form. A resin, a metal having a relatively low melting point, or the like, may be adopted as the filler 20.

The transfer portion 270 disposed horizontally on the moving plate 140 may include a case 271 in communication with the tank 260 to function as a passage through which the filler 20, having been supplied, is transferred, a screw 272 disposed in the case 271 and rotated to transfer the filler 20 in the case 271, and a first motor 273 connected to the screw 272 to rotate the screw 272.

The heating portion 280 heats the transfer portion 270, that is, an interior of the case 271, and uses electrical energy as a heat source. The filler 20, moved in the case 271 by radiation, convection, or conduction using heat generated when electrical energy is passed through a heating element provided in the heating portion 280, may be heated. Power may be connected to the heating portion 280, and a temperature may be set and adjusted through power control.

In a case in which the filler 20 is supplied from the tank 260 as a solid, the heating portion 280 may apply heat to the filler 20 to be melted. In a case in which the filler 20 is supplied as a liquid, the heating portion 280 may play a role in maintaining filler in a molten state or a temperature thereof.

The pressurizing portion 290 may include a supply pipe 291 extended from the other end of a downstream side of the transfer portion 270, a pressurizing main body 292, one side of which is in communication with the supply pipe 291 and the other side of which is in communication with the punch portion 300, a piston 293 moved back and forth in the pressurizing main body 292 to pressurize the filler 20 having flowed into the pressurizing main body 292 toward the punch portion 300, and a driving portion 294, such as a hydraulic cylinder, providing driving force to the piston 293.

A heating member (not illustrated) set at a relatively high temperature may be disposed on an exterior of the supply pipe 291 or the pressurizing main body 292. Therefore, the filler 20 having been melted may be continuously maintained in a molten state.

The piston 293 may be manufactured using a material, such as a metal, withstanding a relatively high temperature. In addition, the piston 293 is formed to have a predetermined thickness. Thus, in a state in which the piston 293 pushes the filler 20 toward the punch portion 300, the piston 293 may close a connection hole 295 of the pressurizing main body 292 in communication with the supply pipe 291, thereby preventing the filler 20 from flowing into the pressurizing main body 292 from the supply portion 291.

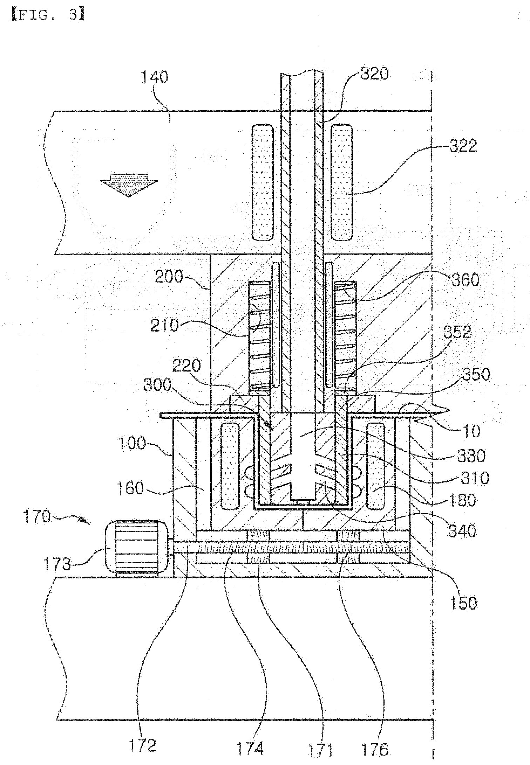

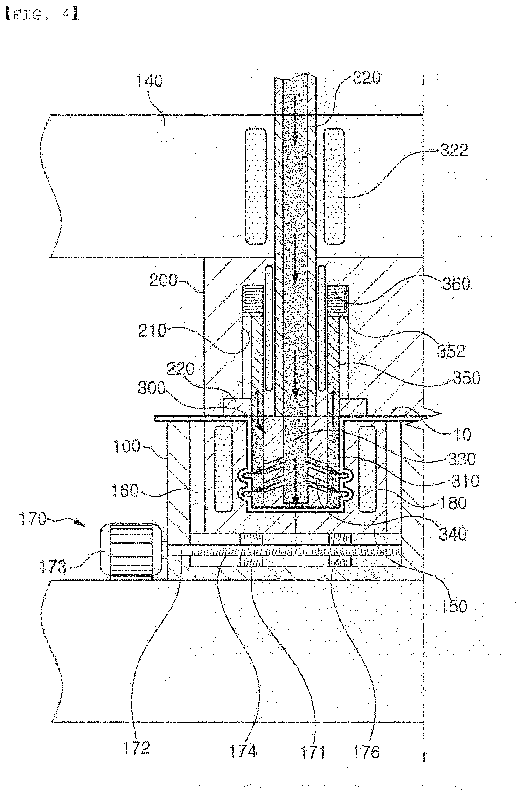

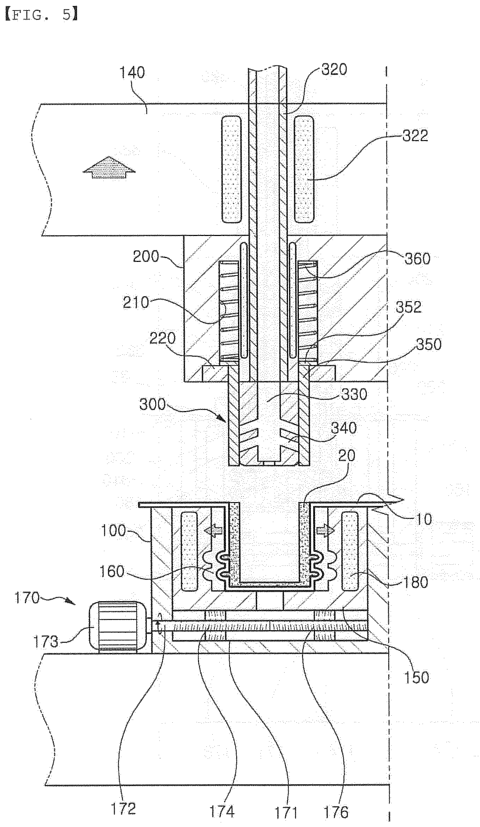

FIG. 3 is a detailed enlarged view of composition of a punch portion and a lower mold, illustrated in FIG. 1, FIG. 4 is a view of an operational state of the punch portion, and FIG. 5 is a view of an operational state of the lower mold.

As illustrated in drawings described above, a product molding device according to an exemplary embodiment may include a punching portion 300 performing hot press forming in which a material 10 mounted on a lower mold 100 is pressurized to be primarily molded and hydroforming in which the filler 20 is supplied toward the material 10 to be secondarily molded, together.

The punch portion 300 may include a punch die 310 disposed in an upper mold 200 and inserted into a molding recess 101 of the lower mold 100 to mold the material 10, a connection pipe 320 in communication with a pressurizing portion 290 and disposed to penetrate through a moving plate 140 and the upper mold 200, a filler passage 330 in communication with the connection pipe 320 and formed in the punch die 310, and a discharge hole 340 connected to the filler passage 330 to extrude the filler 20, having been supplied, toward the material 10.

The punch die 310 may be disposed on a side of the upper mold 200 mounted below the moving plate 140 or may be integrally formed. The punch die 310 protrudes further than a surface of the upper mold 200. A degree of protrusion may be designed to be different, depending on a form of a product. The punch die 310 may compress the material 10 in cooperation with the molding recess 101 of the lower mold 100, thereby performing hot press forming. Accordingly, a form of the product, such as a protruding portion, may be primarily molded.

In addition, the punch die 310 includes the filler passage 330 formed therein. A plurality of discharge holes 340 may be processed in a direction of an exterior of the filler passage 330 based thereon. The discharge hole 340 may also be processed on a bottom surface of the punch die 310. The filler passage 330 and the discharge hole 340 may provide the filler 20 to the material 10 from the punch die 310, thereby performing hydroforming. Thus, the remainder of a form of the product, such as a protrusion or a bead, provided on the protruding portion, or the like, may be secondarily molded.

The connection pipe 320 is provided as a member transmitting the filler 20 pressurized in the pressurizing portion 290 to the filler passage 330 of the punch die 310. A through-hole penetrating through the moving plate 140 and the upper mold 200 is formed, and then the connection pipe 320 is inserted into an interior thereof. Subsequently, a pressurizing main body 292 and the punch die 310 are connected to opposing sides of the connection pipe 320, respectively. In a case in which the punch die 310 and the upper mold 200 are integrally formed, the connecting pipe 320 may be inserted into a side of the moving plate 140, and then the pressurizing main body 292 may be connected to the connection pipe 320.

A heating member 322 allowing the filler 20 not to be cured, but to continuously maintain a molten state by applying heat thereto surrounds at least a portion of the connection pipe 320.

Furthermore, the product molding device according to an exemplary embodiment may include a guide ring 350 surrounding an outer circumferential surface of the punch die 310 and movable in a moving direction of the punch die 310. When the filler 20 is supplied from the punch die 310 to be cured and then formed to be a cushioning material, the guide ring 350 may have a thickness such that a space corresponding to a thickness of the cushioning material may be left between the molding recess 101 of the lower mold 100 and the punch die 310.

In addition, the guide ring 350 may protrude from the upper mold 200 and may be disposed to be inserted into the upper mold 200 as illustrated in FIG. 4. To this end, an insertion groove 210 is formed on a periphery of the through-hole of the upper mold 200 into which the connection pipe 320 is inserted.

A cover 220 limiting an opening area thereof may be connected to an opening of the insertion groove 210. A flange portion 352 may be formed or disposed to correspond to an end of the guide ring 350, thereby preventing the guide ring 350 from being detached from the insertion groove 210.

A spring 360 may be interposed between a wall portion opposing the opening and the flange portion 352 of the guide ring 350 in the insertion groove 210. Spring stiffness of the spring 360 is set such that the spring 360 may overcome resistance of the material 10, so that the guide ring 350 may be moved together with the punch die 310, when the punch die 310 compresses the material 10. When the filler 20 is supplied from the punch die 310 to the material 10, the spring 360 may not withstand liquid pressure of the filler 20, so that the guide ring 350 may be detached from the punch die 310 to be inserted into the insertion groove 210 of the upper mold 200.

With reference to FIG. 3, the lower mold 100 of the product molding device according to an exemplary embodiment may include a plurality of division portions 150 separable to remove the product thereon. To this end, a space portion 160 having a size in consideration of a moving distance of each division portion 150 may be formed in the lower mold 100.

In addition, since a path (not illustrated) on which cooling water may flow is formed in the lower mold 100, the lower mold 100 may be cooled by cooling water.

As described above, the material 10 may be mounted on the lower mold 100. At least one molding recess 101 to form the product by molding the material 10 may be divided. In addition, an additional molding recess (102, see FIG. 5), to perform hydroforming, may be formed in a side wall of the molding recess 101.

A moving portion 170 moving the division portion 150 in a specific direction at a specific distance to be separated from each other may be provided in the space portion 160.

For example, the moving portion 170 may include a moving block 171 fixed to each of the division portions 150, a screw bar 172 screw coupled to the moving block 171, and a second motor 173 connected to an end of the screw bar 172 to rotate the screw bar 172.

The screw bar 172 may include a double screw member having screw threads 174 and 176, opposing sides of which have different directions based on a central portion thereof, and the moving block 171 is coupled to each of the screw threads 174 and 176. In addition, the screw bar 172 may be extended through the lower mold 100, and the second motor 173 may be connected to an extended end thereof.

Therefore, as illustrated in FIG. 5, in a case in which the screw bar 172 is rotated in a direction by the second motor 173, the moving blocks 171 may be moved in the opposite directions, so that the division portion 150 of the lower mold 100 may be divided. In a case in which the screw bar 172 is rotated in the opposite direction by the second motor 173, the moving blocks 171 may be moved toward each other, so that division portions 150 may be combined to form the lower mold 100.

In order for respective division portions 150 to be smoothly moved, a guide portion (not illustrated) guiding respective division portions 150 may be disposed in the space portion 160.

However, composition, an operation, and an arrangement of the moving portion 170 are not limited to an example described above, and any other means, such as a hydraulic cylinder and an actuator, may be applied.

In respective division portions 150, a heating body 180 to maintain a portion of the material 10 at a relatively high temperature and maintain the molten state of the filler 20 having been melted may be embedded adjacently to the molding recess 101. The heating body 180 is configured such that power may be applied thereto.

In a case in which molding of the product is completed, power of the heating body 180 is turned off, and the filler 20 is cured, an operating rod 132 of an operation portion 130 may be contracted, and the moving plate 140 may ascend by the operating rod 132, thereby raising the upper mold 200. In this case, the punch die 310 of the punch portion 300 connected to the upper mold 200 is separated from the lower mold 100.

Simultaneously or subsequently, the moving portion 170 in the lower mold 100 is operated to allow the division portions 150 to be moved in the opposite directions, thereby efficiently removing a molded product.

In the meantime, in the product molding device according to an exemplary embodiment, the operation portion 130, a first motor 273, a heating portion 280, a driving portion 294, a heating member 322, the second motor 173, the heating body 180, or the like, may be electrically connected to a control unit (not illustrated) of a device, so that an operation thereof may be controlled.

Here, a method of molding a product according to an exemplary embodiment will be described.

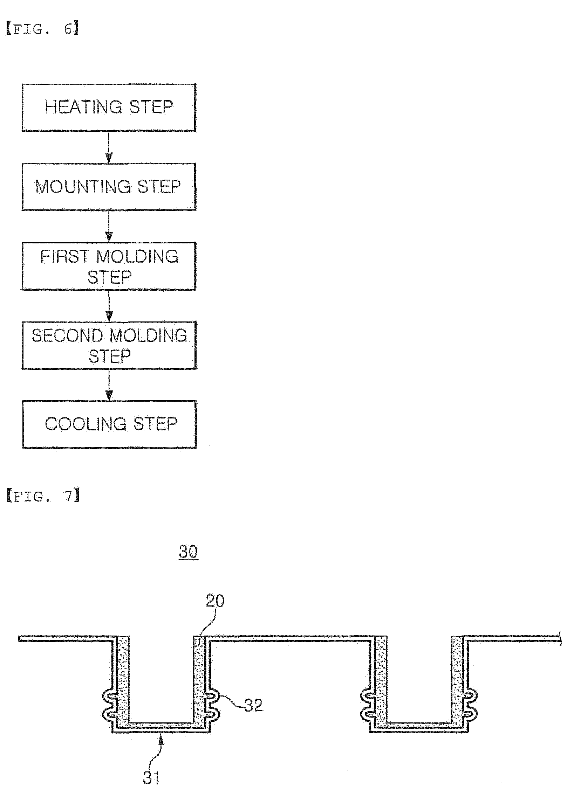

FIG. 6 is a block diagram of a method of molding a product according to an exemplary embodiment.

As illustrated, the method of molding a product comprises a heating step of heating a material 10; a mounting step of mounting the material 10 on a lower mold 100; a first molding step of primarily molding the material 10 by lowering an upper mold 200 to the lower mold 100; a second molding step of secondarily molding the material 10 by applying fluid pressure from the upper mold 200 or the lower mold 100 in a state in which the upper mold 200 has been lowered; and a cooling step of cooling the material 10.

First, the material 10 having been cut to have a predetermined shape is drawn into a heating furnace (not illustrated) and heated during a predetermined time. Subsequently, the material 10 may be transferred to a product molding device according to an exemplary embodiment using a transfer device (not illustrated).

The material 10 having been heated and transferred may be mounted on the lower mold 100 in which a molding recess 101 is formed.

In the first molding step of primarily molding the material 10, in a case in which, before the material 10, mounted on the lower mold 100, is cooled, an operation portion 130 is operated to extend an operating rod 132, a moving plate 140 disposed in the operating rod 132 may descend. Accordingly, the upper mold 200 may descend together with the moving plate 140, and a punch die 310 of a punch portion 300 disposed in the upper mold 200 may compress the material 10 in cooperation with the molding recess 101 of the lower mold 100, thereby performing hot press forming.

In this case, a cold portion of a mold provides rigidity by cooling the material 10, as well as by molding the material 10. However, a first molding portion of the material 10 primarily molded by the first molding step, for example, a portion of a product in which a protruding portion is formed is maintained at a temperature the same as or similar to a temperature of the first molding step by the heating body 180 of the lower mold 100. Thus, the protruding portion of the product is maintained to be relatively hot, not to be cooled, after being formed.

A second molding step of secondarily molding the material 10 is performed by the punch die 310 of the punch portion 300 protruding from the upper mold 200, for example, in a state in which the protruding portion of the product is formed.

In order to supply the filler 20 to an interior of the punch portion 300, a screw 272 provided in a case 271 of a transfer portion 270 is rotated by rotating a first motor 273 of a filler supply portion 250. In a case in which the filler 20 supplied from a tank 260 is provided as a solid, the filler 20 is melted by a heating portion 280 to be liquefied or fluidized, while being moved in an interior of the transfer portion 270. Alternatively, in a case in which the filler 20, having been supplied, is provided as a liquid, the filler 20 may be maintained in a molten state or at a temperature thereof by the heating portion 280.

The filler 20 having been fluidized is continuously moved through a supply pipe 291 and a connection hole 295 to be introduced to an interior of a pressurizing main body 292 and accumulated therein. A portion thereof is moved to the punch portion 300 by the medium of a connection pipe 320.

In a case in which the filler 20 is moved to fill from the punch portion 300 to the pressurizing main body 292, a piston 293 is moved by a driving portion 294 to pressurize the filler 20. In a state in which the piston 293 pushes the filler 20 toward the punch portion 300, the connection hole 295 in communication with the supply pipe 291 is closed to prevent the filler 20 from being introduced to the pressurizing main body 292 from the supply pipe 291.

The filler 20 sequentially penetrates through the connection pipe 320, a filler passage 330, and a discharge hole 340 to be discharged outwardly of the pinch die 310 by pushing force of the piston 293 and pushes the material 10 maintained in a hot state, thereby performing hydroforming.

A second molding portion, for example, a form of a protrusion or a bead, may be molded in a first molding portion of the material 10 primarily molded by the first molding step, that is, a protruding portion of the product having been formed in advance, in response to an additional molding recess 102 formed in the lower mold 100.

The product is secondarily molded by fluid pressure of the filler 20 having been discharged, and a guide ring 350 supported by the spring 360 embedded in the insertion groove 210 of the upper mold 200 and pressurizing the material 10 together with the punch die 310 is pushed into the insertion groove 210 to be inserted thereinto.

In a case in which the spring 360 is no longer compressed, movement of the guide ring 350 is prevented. An edge of the guide ring 350 may be disposed on an upper surface of the material 10, that is, in a position the same as a surface of the product, in an insertion position in which the movement of the guide ring 350 is prevented.

As described above, in a state in which the protruding portion is formed in the product, the protrusion or the bead is formed in the protruding portion, and the filler 20 is supplied, in a case in which a heating operation of the heating body 180 embedded in each division portion 150 of the lower portion 100 is stopped, the filler 20 is cooled to be cured. Thus, the filler 20 having been cured is formed to be a cushioning material of the product.

In a case in which the filler 20 is cured, the operating rod 132 of the operation portion 130 is contracted, and the operating rod 132 causes the moving plate 140 to ascend, thereby raising the upper mold 200. In this case, the punch die 310 of the punch portion 300, connected to the upper mold 200 is separated from the lower mold 100.

Simultaneously, the guide ring 350 inserted into the insertion groove 210 of the upper mold 200 protrudes from the upper mold 200 by the spring 360, and according to movement described above, the discharge hole 340 formed in the punch die 310 is closed, thereby preventing the filler 20 from leaking. In addition, a flange portion 352 formed on an end of the guide ring 350 may be caught by a cover 220 disposed in an opening of the insertion groove 210, thereby preventing the guide ring 350 from being detached from the insertion groove 210.

In the meantime, due to the protrusion or the bead, formed in the product, the product may not be directly separated from the mold. A moving portion 170 in the lower mold 100 according to an exemplary embodiment may be operated to move division portions 150 in opposite directions.

For example, in a case in which a second motor 173 forming the moving portion 170 is rotated, a screw bar 172 connected thereto may be rotated, and moving blocks 171 coupled to screw threads 174 and 176 formed in opposite directions in the screw bar 172 may be moved in opposite directions, so that an interval between the division portions 150 may be increased to allow the division portions 150 to be separated from each other.

As described above, at least a portion of the lower mold 100 or the upper mold 200 may be divided, thereby extracting the material 10 having been molded.

FIG. 7 is a view of an example of a product formed using a product molding device according to an exemplary embodiment.

A product according to an exemplary embodiment is manufactured using steel and comprises a structure in which at least a portion includes martensite. A three-dimensional second molding portion smaller than a first molding portion is formed in a three-dimensional first molding portion.

In detail, a portion not including the first molding portion in the product has a structure including martensite using hot press forming. That is, after a material is heated to a relatively high temperature, the material is quickly transferred to be mounted on a mold in a press. In subsequence, the portion is molded and quickly cooled due to a relatively low temperature of the mold, thereby having a structure including martensite.

In addition, the first molding portion and a second molding portion formed therein are maintained at a constant temperature for hydroforming and are cooled at a rate slower than that after hot press forming to have a structure including ferrite or bainite.

However, the present disclosure is not limited thereto. For example, in a case in which hydroforming is performed while a specific temperature is not maintained, the first molding portion and the second molding portion formed therein may have a structure including martensite in a manner similar to other portions.

A product 30 illustrated in FIG. 7 is, for example, an impact absorbing member of an automobile. The product 30 may include a plurality of protruding portions 31 as the first molding portion formed by hot press forming to absorb an impact and may include a plurality of protrusions or beads 32 as the second molding portion formed on the plurality of protruding portions 31 using hydroforming to strengthen rigidity of the plurality of protruding portions 31. In addition, a filler 20 used in hydroforming may be cured to be formed as a cushioning material forming a portion of the product 30.

In a case in which the product is applied to an actual vehicle, a protrusion, a bead 32, or the filler 20, as well as a protruding portion 31, may absorb an impact. Thus, in a case in which an impact is applied to the product 30, safety may be secured.

In addition, according to an exemplary embodiment, the product 30 may be molded more easily and quickly using hot press forming and hydroforming together, thereby reducing the number of processes and time required for manufacturing the product 30 to cut costs.

While exemplary embodiments have been shown and described above, it will be apparent to those skilled in the art that modifications and variations could be made without departing from the scope of the present invention as defined by the appended claims. Thus, exemplary embodiments in the present disclosure should not be construed as being limited to the particular shapes of regions shown herein, for example, to include a change in shape results in manufacturing. The following embodiments may also be constituted alone, in combination or in partial combination.

### [Industrial Applicability]

As described above, a product may be molded more easily and quickly using hot press forming and hydroforming together. Thus, the present disclosure is useful for manufacturing automotive parts.

## Claims

1. A method of molding a product, comprising:
a heating step of heating a material;
a mounting step of mounting the material on a lower mold;
a first molding step of primarily molding the material by lowering an upper mold to the lower mold;
a second molding step of secondarily molding the material by applying fluid pressure from the upper mold or the lower mold in a state in which the upper mold has been lowered; and
a cooling step of cooling the material.

2. The method of claim 1, wherein, in the second molding step, a second molding portion is formed in a first molding portion of the material primarily molded using the first molding step.

3. The method of claim 1, wherein a portion of the material to be secondarily molded in the second molding step is maintained at a temperature of the first molding step.

4. The method of claim 3, wherein the cooling step is performed simultaneously with the second molding step or before the second molding step is completed.

5. The method of claim 1, wherein, in the cooling step, the material is cooled to have a structure including martensite.

6. The method of claim 1, wherein the second molding step comprises a liquefying step of heating a filler to be liquefied and a fluid pressure discharging step of discharging the fluid pressure by pressurizing the filler having been liquefied.

7. The method of claim 6, further comprising a separation step of separating the upper mold from the lower mold after the filler is cured in the cooling step.

8. The method of claim 7, further comprising an extraction step of extracting the material formed by dividing at least a portion of the lower mold or the upper mold.

9. A product molding device, comprising:
a lower mold in which at least one molding recess is formed and on which a material is mounted;
an upper mold disposed above the lower mold to pressurize the material; and
a punch portion disposed in the upper mold and inserted into the at least one molding recess of the lower mold to mold the material and discharging a filler having been pressurized.

10. The product molding device of claim 9, comprising a filler supply portion supplying the filler to the punch portion and pressurizing.

11. The product molding device of claim 10, further comprising an operation portion vertically disposed on a frame and including an operating rod, and a moving plate connected to the operating rod and ascending and descending by the operating rod,
wherein the upper mold is disposed below the moving plate, and the filler supply portion is disposed on the moving plate.

12. The product molding device of claim 11, wherein the filler supply portion comprises a tank supplying the filler, a transfer portion connected below the tank and disposed on the moving plate to transfer the filler, a heating portion disposed to surround at least a portion of the transfer portion, and a pressurizing portion connected between a point downstream of the transfer portion and the punch portion and pressurizing the filler to be transferred to the punch portion.

13. The product molding device of claim 12, wherein the transfer portion comprises a case in communication with the tank, to which the filler is supplied, a screw disposed in the case and rotated to transfer the filler in the case, and a first motor connected to the screw to rotate the screw.

14. The product molding device of claim 12, wherein the pressurizing portion comprises a supply pipe extended from a downstream side of the transfer portion, a pressurizing main body, one side of which is in communication with the supply pipe and the other side of which is in communication with the punch portion, a piston moved back and forth in the pressurizing main body to pressurize the filler having flowed into the pressurizing main body toward the punch portion, and a driving portion providing a driving force to the piston.

15. The product molding device of claim 14, wherein, in a state in which the piston pushes the filler toward the punch portion, the piston closes a connection hole of the pressurizing main body in communication with the supply pipe.

16. The product molding device of claim 12, wherein the punch portion comprises a punch die disposed in the upper mold and inserted into the at least one molding recess of the lower mold to mold the material, a connection pipe in communication with the pressurizing portion and disposed to penetrate through the moving plate and the upper mold, a filler passage in communication with the connection pipe and formed in the punch die, and a discharge hole connected to the filler passage to extrude the filler, having been supplied, toward the material.

17. The product molding device of claim 16, wherein at least a portion of the connection pipe is surrounded by a heating member.

18. The product molding device of claim 16, comprising a guide ring surrounding an outer circumferential surface of the punch die and moved in a moving direction of the punch die.

19. The product molding device of claim 18, wherein an insertion groove is formed on a periphery of the connection pipe in the upper mold to allow the guide ring to be inserted into the upper mold, and a spring is interposed between a wall portion opposing an opening and the guide ring in the insertion groove.

20. The product molding device of claim 9, wherein the lower mold comprises a plurality of division portions which are separable, and the at least one molding recess is divided.

21. The product molding device of claim 20, wherein a moving portion allowing each of the plurality of division portions to be moved to be separated from each other is provided.

22. The product molding device of claim 21, wherein the moving portion comprises a moving block fixed to the division portion, a screw bar screw coupled to the moving block, and a second motor connected to an end of the screw bar to rotate the screw bar,
wherein the screw bar is provided as a double screw member having screw threads, opposing sides of which have different directions based on a central portion.

23. The product molding device of claim 20, wherein a heating body is embedded adjacently to the molding recess in each of the plurality of division portions.

24. The product molding device of claim 9, wherein an additional molding recess is formed on a side wall of the at least one molding recess.

25. A hot press forming product, the product being manufactured using steel, comprising:
a structure having martensite in at least a portion of the product,
wherein a three-dimensional second molding portion smaller than a first molding portion is formed in a three-dimensional first molding portion.

26. The hot press forming product of claim 25, wherein the first molding portion is formed by being molded in one direction, the second molding portion is formed by being molded in a direction different from the one direction in the first molding portion.

27. The hot press forming product of claim 25, wherein the first molding portion and the second molding portion comprise a structure the same as a structure including the martensite.

28. The hot press forming product of claim 25, wherein the first molding portion and the second molding portion comprise a structure including ferrite or bainite.

29. The hot press forming product of claim 25, wherein a cured portion of filler is at least included in the second molding portion.

30. The hot press forming product of claim 29, wherein the filler is formed using a resin or a metal, a melting point of which is lower than a melting point of the steel.

## Amended claims

### Amended claims under Art. 19.1 PCT

1. (Amended) A method of molding a product, comprising:
a heating step of heating a material;
a mounting step of mounting the material on a lower mold;
a first molding step of primarily molding the material by lowering an upper mold to the lower mold;
a second molding step of secondarily molding the material by applying fluid pressure from the upper mold or the lower mold in a state in which the upper mold has been lowered; and
a cooling step of cooling the material,
wherein the second molding step comprises a liquefying step of heating a filler to be liquefied and a fluid pressure discharging step of discharging the fluid pressure by pressurizing the filler having been liquefied.

2. (Original) The method of claim 1, wherein, in the second molding step, a second molding portion is formed in a first molding portion of the material primarily molded using the first molding step.

3. (Original) The method of claim 1, wherein a portion of the material to be secondarily molded in the second molding step is maintained at a temperature of the first molding step.

4. (Original) The method of claim 3, wherein the cooling step is performed simultaneously with the second molding step or before the second molding step is completed.

5. (Original) The method of claim 1, wherein, in the cooling step, the material is cooled to have a structure including martensite.

6. (Deleted)

7. (Amended) The method of claim 1, further comprising a separation step of separating the upper mold from the lower mold after the filler is cured in the cooling step.

8. (Original) The method of claim 7, further comprising an extraction step of extracting the material formed by dividing at least a portion of the lower mold or the upper mold.

9. (Amended) A product molding device, comprising:
a lower mold in which at least one molding recess is formed and on which a material is mounted;
an upper mold disposed above the lower mold to pressurize the material; and
a punch portion disposed in the upper mold and inserted into the at least one molding recess of the lower mold to mold the material and discharging a filler having been pressurized,
wherein the lower mold comprises a plurality of division portions which are separable, and the at least one molding recess is divided.

10. (Original) The product molding device of claim 9, comprising a filler supply portion supplying the filler to the punch portion and pressurizing.

11. (Original) The product molding device of claim 10, further comprising an operation portion vertically disposed on a frame and including an operating rod, and a moving plate connected to the operating rod and ascending and descending by the operating rod,
wherein the upper mold is disposed below the moving plate, and the filler supply portion is disposed on the moving plate.

12. (Original) The product molding device of claim 11, wherein the filler supply portion comprises a tank supplying the filler, a transfer portion connected below the tank and disposed on the moving plate to transfer the filler, a heating portion disposed to surround at least a portion of the transfer portion, and a pressurizing portion connected between a point downstream of the transfer portion and the punch portion and pressurizing the filler to be transferred to the punch portion.

13. (Original) The product molding device of claim 12, wherein the transfer portion comprises a case in communication with the tank, to which the filler is supplied, a screw disposed in the case and rotated to transfer the filler in the case, and a first motor connected to the screw to rotate the screw.

14. (Original) The product molding device of claim 12, wherein the pressurizing portion comprises a supply pipe extended from a downstream side of the transfer portion, a pressurizing main body, one side of which is in communication with the supply pipe and the other side of which is in communication with the punch portion, a piston moved back and forth in the pressurizing main body to pressurize the filler having flowed into the pressurizing main body toward the punch portion, and a driving portion providing a driving force to the piston.

15. (Original) The product molding device of claim 14, wherein, in a state in which the piston pushes the filler toward the punch portion, the piston closes a connection hole of the pressurizing main body in communication with the supply pipe.

16. (Original) The product molding device of claim 12, wherein the punch portion comprises a punch die disposed in the upper mold and inserted into the at least one molding recess of the lower mold to mold the material, a connection pipe in communication with the pressurizing portion and disposed to penetrate through the moving plate and the upper mold, a filler passage in communication with the connection pipe and formed in the punch die, and a discharge hole connected to the filler passage to extrude the filler, having been supplied, toward the material.

17. (Original) The product molding device of claim 16, wherein at least a portion of the connection pipe is surrounded by a heating member.

18. (Original) The product molding device of claim 16, comprising a guide ring surrounding an outer circumferential surface of the punch die and moved in a moving direction of the punch die.

19. (Original) The product molding device of claim 18, wherein an insertion groove is formed on a periphery of the connection pipe in the upper mold to allow the guide ring to be inserted into the upper mold, and a spring is interposed between a wall portion opposing an opening and the guide ring in the insertion groove.

20. (Deleted)

21. (Amended) The product molding device of claim 9, wherein a moving portion allowing each of the plurality of division portions to be moved to be separated from each other is provided.

22. (Original) The product molding device of claim 21, wherein the moving portion comprises a moving block fixed to the division portion, a screw bar screw coupled to the moving block, and a second motor connected to an end of the screw bar to rotate the screw bar,
wherein the screw bar is provided as a double screw member having screw threads, opposing sides of which have different directions based on a central portion.

23. (Amended) The product molding device of claim 9, wherein a heating body is embedded adjacently to the molding recess in each of the plurality of division portions.

24. (Original) The product molding device of claim 9, wherein an additional molding recess is formed on a side wall of the at least one molding recess.

25. (Amended) A hot press forming product, the product being manufactured using steel, comprising:
a structure having martensite in at least a portion of the hot press forming product,
wherein a three-dimensional second molding portion smaller than a first molding portion is formed in a three-dimensional first molding portion,
wherein a cured portion of filler is at least included in the second molding portion.

26. (Original) The hot press forming product of claim 25, wherein the first molding portion is formed by being molded in one direction, the second molding portion is formed by being molded in a direction different from the one direction in the first molding portion.

27. (Original) The hot press forming product of claim 25, wherein the first molding portion and the second molding portion comprise a structure the same as a structure including the martensite.

28. (Original) The hot press forming product of claim 25, wherein the first molding portion and the second molding portion comprise a structure including ferrite or bainite.

29. (Deleted)

30. (Amended) The hot press forming product of claim 25, wherein the filler is formed using a resin or a metal, a melting point of which is lower than a melting point of the steel.

Statement under Art. 19.1 PCT
1. Claim 1 has been amended to include claim 6, claim 9 has been amended to include claim 20, and claim 25 has been amended to include claim 29. The amendments to these claims are legitimate amendments that do not add new matters.

2. In claims 7, 21, 23 and 30, the citation relationship has been simply corrected. The amendments to these claims are legitimate amendments that do not add new matters.
